# EUROPEAN PATENT APPLICATION

(11) **EP 1 793 509 A1**
(43) Date of publication of application: **06.06.2007**
(21) Application number: 05300990.8
(22) Date of filing: 01.12.2005
(51) Int. Cl.: H04B 7/005

(54) **Transmit power control for a communication system**

(71) Applicant: Alcatel Lucent, 75008 Paris (FR)
(72) Inventor: Jeschke, Michael, 70197, Stuttgart (DE); Schütz, Thomas, 71229, Leonberg (DE)
(74) Representative: Brose, Gerhard

(57) **Abstract**

The invention relates to a method for transmission power control in a single- or multi-carrier communications system, each carrier comprising a plurality of communication physical channels, and in which a maximum transmission power budget is distributed between the physical channels within one carrier and/or between carriers, the method comprising adding the digital physical channel signals belonging to each carrier; calculating the power of each digital carrier signal and adding the power of all carriers; comparing a resulting transmission power value (PC) to a certain threshold value (PT), if the transmission power value (PC) is lower than the threshold value (PT), calculating a margin of transmission power available (NU3) for each of the carriers; sending said transmission power margin to at least one base band module (BB1 to BBn) in charge of transmitting physical channel signals for said carriers and said at least one base band module (BB1 to BBn) using said transmission power margin (NU3) for transmitting extra physical channels (H2) in said carriers.

## Description

The present invention relates to data communication systems, and more particularly, to a method and system to perform intelligent transmit power control in a single- or multi-carrier communication system.

In data communication systems signals are usually transmitted through a communication path by means of at least one carrier frequency channel. Today multi-carrier transmitters transmit over a broad range of frequencies and are also referred as wideband transmitters. Each carrier usually comprises a plurality of physical communication channels which are intended for individual communication between transmit and receiving equipment. For example, current Universal Mobile Telecommunications System (UMTS) transmission and reception equipment deal with a bandwidth of about 20 MHz covering four adjacent carriers of 5MHz bandwidth each. A 5MHz UMTS carrier comprises a number of physical communication channels e.g. common channels, dedicated channels and high speed downlink packet access (HSDPA) channels, separated by a code, in accordance to CDMA (Code Division Multiple Access) schemes which are known for the skilled in the art.

Such kind of transmitters have a maximum transmission power available which shall be shared between the different kinds of physical communication channels and the different carriers and it must be ensured that the sum of the transmission power used for the physical communication channels and the carriers does not exceed such maximum transmission power.

It is the object of the present invention to provide a method for transmission power control in a communications system.

The object is achieved by a method for transmission power control in a single- or multi-carrier communications system according to claim 1, a transmitter power control system for a single- or multi-carrier communication system according to claim 5, and a base station according to claim 7.

The transmission power control method of the present invention allows the dynamic use of the available transmission power budget between different kinds of physical communication channels and different carriers and at the same time ensuring that said available transmission power budget is not exceeded. Depending on the actual traffic load occurring at any given moment, physical channels and carriers can take advantage of the transmission power not used by another physical channels and carriers.

The adaptive behavior of the transmission power control method of the invention is particularly useful in case that e.g. HSDPA physical channels are used for communication in at least one of the carriers. In this case, according to the invention, the HSDPA physical channels can use the transmission power available that is not used by common or dedicated channels of the same or of other carriers supplied by the transmitter unit.

In an embodiment of the invention, priority is given to communication using common and dedicated communication channels i.e. they are allowed to use the transmission power available as needed according to traffic conditions up to the maximum power the transmitter unit can provide. But if the dedicated and common channels use only a part of the total transmission power available, the remaining power can be used for HSDPA packet channels in a dynamic manner, such that at any instant of time the maximum available transmission power of the transmitter is used.

Advantageous configurations of the invention emerge from the dependent claims, the following description and the drawings. For example, it is seen advantageous that by applying the transmission power control of the invention a more efficient usage of the transmitter power amplifier available power is achieved, specially for multi-carrier power amplifiers. Further, physical communication channels apart from conventional common and dedicated channels, such as HSDPA physical channels, can be transmitted without degrading established communication because they only use transmission power which is not used by other physical channels. Since no static and/or statistic predefined share of the transmission power is allocated to the physical channels and the carriers, no resources are wasted when said fixed allocated transmission power share is not used.

An embodiment example of the invention is now explained with the aid of Figures 1 to 6.

Fig. 1 illustrates a simplified block diagram of a four-carrier radio transmitter with a transmitter power control system according to the invention.

Fig. 2 is a flowchart showing an operation example of a transmitter power control method according to the invention.

Fig. 3 shows an example of a conventional static transmission power allocation for a two-carrier communication system.

Fig. 4 A,B show a first example of a dynamic transmission power control according to the invention.

Fig. 5 shows a second example of a dynamic transmission power control according to the invention.

Fig. 6 shows a third example of a dynamic transmission power control according to the invention.

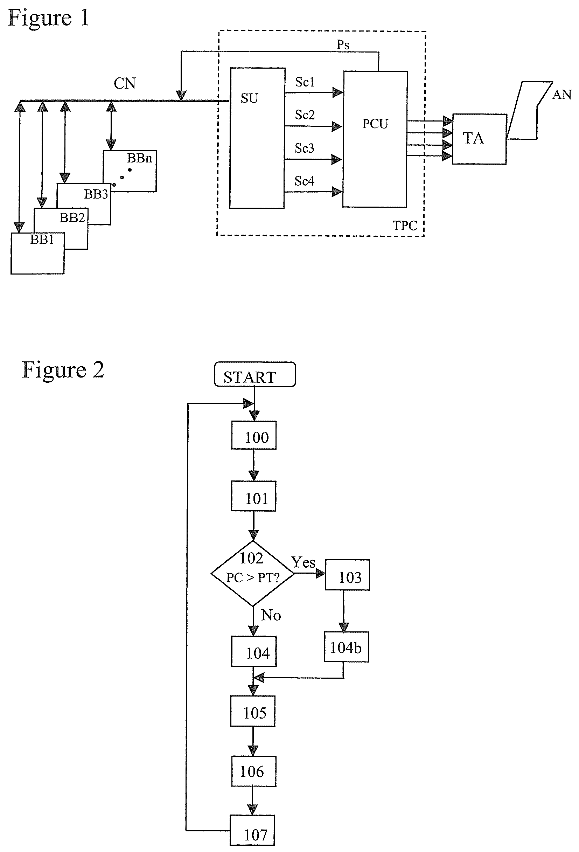

Figure 1 shows a plurality of base band modules BB1 to BBn, a communication interface CN, a transmitter power control system TPC, a transmission adaptation stage TA and an antenna network AN. The transmitter power control system TPC comprises a physical channel summation unit SU providing four digital carrier signals Sc1 to Sc4, and a power control unit PCU. The transmitter power control system TPC further provides a power indication signal Ps.

The base band modules BB1 to BBn provide processing means for receiving and transmitting the base band signals which constitute the "physical communication channels" of the carriers, for example base band boards BB1, BB5 and BB10 may contribute base band signals for physical channels comprised in a first carrier and base band boards BB2, BB3 and BB1 may contribute base band signals for physical channels comprised in a second carrier. Said base band signals may be intended for different types of communication between a transmitter and a receiver, for example, some of said base band signals are used for "common channel" communication so that the signals are intended for more than one receiver, another base band signals are used for "dedicated channel" communication so that the signal is intended for a determined receiver, and there may be another type of base band signals intended for other purposes such for example base band signals for HSDPA communication. Some of the base band modules may be specialized in processing only one kind of base band signals e.g. HSDPA signals, or may deal with two or more different kinds of base band signals e.g. common and dedicated channel signals. The plurality of base band modules BB1 to BBn transmit and receive said base band signals and any other type of information by means of a communication interface CN intended for fast communication between the elements of the transmitter.

According to the invention, the transmitter power control system TPC comprises a physical channel summation unit SU connected to the communication interface CN and in charge of digitally adding the plurality of physical channel signals coming from the base band modules BB1 to BBn for each carrier. Said physical channel summation unit SU provides then four digital carrier signals Sc1 to Sc4 which are the digital sum of all the physical channel signals in digital form contributing to each carrier. Although shown in Figure 1 as an external independent module block, it is understood that the functionality of the physical channel summation unit SU could be also provided inside a base band board module BB1 to BBn which is connected to the communication interface CN or in a power amplifier or antenna network module.

Also according to the invention, the transmitter power control system TPC further comprises a power control unit PCU which processes the digital carrier signals Sc1 to Sc4. The following is an example of the operation of the power control unit PCU shown in Figure 1.The power control unit PCU digitally sums up the digital power of the four digital carrier signals Sc1 to Sc4 and compares said resulting value, which is an indication of the signal power to be transmitted by the wideband power amplifier, with a threshold value corresponding to the maximum available transmission power of the transmitter or alternatively to a predefined maximum transmission power value configured according to network planning purposes.

If the calculated signal power to be transmitted exceeds the threshold value then the power control unit PCU calculates the amount of transmission power overload and scales down said digital carrier signals Sc1 to Sc4 linearly by a certain factor such that their power sum has a value lower than said threshold value. On the other hand, when the power sum of all the digital carrier signals Sc1 to Sc4 does not exceed the maximum transmission power threshold value, the power control unit PCU calculates the remaining, if any, transmission power which is not used.

As an example, if traffic load for a radio communication system cell is low and carrier power usage is low e.g. carrier one uses only 20% of the maximum transmission power, carrier two 20%, carrier three 10% and carrier four 10% the power control unit PCU detects that there is still 40% of the maximum transmission power available which is not used and could be allocated to other physical channels intended for other type of communication. This is of particular advantage for example when introducing HSDPA communication service in a radio communications system already providing communication using common and dedicated channel service. If traffic load for common and dedicated channels is low as the example above, the remaining 40% of the maximum transmission power could be used for the system for transmission of HSDPA physical channels.

The power control unit PCU sends the determined margin of transmission power available for each carrier without incurring in an overload situation by means of a power indication signal Ps e.g. to the base band modules which process HSDPA traffic for that carrier. With this information the corresponding HSDPA base band module can schedule HSDPA channels according to the transmission power available, in order to increase or decrease the amount of power to be allocated for HSDPA channels. The power control unit PCU sends a power indication signal Ps also with information of an overload situation, that is, when the power sum of the digital carrier signals Sc1 to Sc4 exceeds the maximum allowed transmission power threshold value, so that the corresponding base band module e.g. the HSDPA base band module can react by reducing its formerly allocated transmission power in order to relieve said overload situation.

In the example of Figure 1, the power control unit PCU passes four digital carrier signals (the same as the input or scaled down) to the next transmitter stages TA, comprising a multi-carrier power amplifier, for adaptation and final transmission through an antenna network AN, but it is understood that this could be done also by other ways, in which, for example, the power control unit PCU itself does scale down the received digital carrier signals Sc1 to Sc4 but could alternatively send linear scale down information to another module which would actually provide said scaled down signals to the next transmitter stages TA.

The physical channel summation unit SU and the power control unit PCU provide results on periodic time intervals, typically of 2 ms or 10ms.

Figure 2 is a flowchart showing an operation example of a transmitter power control method for a multi-carrier transmitter comprising steps 100 to 107.

The process starts with step 100 in which all digital physical channel signals e.g. common channels, dedicated channels and HSDPA channels, belonging to a certain carrier are digitally added for each carrier.

In step 101 the digital power of the n different digital carrier signals are digitally added, giving a total transmission power to be transmitted PC by the multi-carrier power amplifier of the transmitter.

In step 102 said calculated digital transmission power PC is compared to a threshold value PT corresponding to a maximum available transmission power value of the transmitter or alternatively to a predefined maximum transmission power value configured according to network planning purposes.

If the power of the signal to be transmitted calculated in step 101 is greater than the threshold value then the condition of step 102 is met and the system follows with step 103 by calculating the overload of transmission power, that is, the margin of power that the power value to be transmitted PC exceeds the threshold value PT. After step 103, the method follows with step 104b scaling down linearly each of the n different digital carrier signals obtained in step 100 by a certain factor such as to reduce the transmission power PC below the power threshold value PT.

On the other hand, if the power of the signal to be transmitted PC calculated in step 101 is lower than the threshold value PT and the condition of step 102 is not met then the system follows with step 104 by calculating a margin of transmission power available for each of the n carriers.

In step 105 the transmission power margin calculated in step 104 or the power overload margin calculated in step 103 is sent to the corresponding base band modules in charge of transmitting the physical channels signals.

In step 106 the n different digital carrier signals obtained in step 100 or said digital carrier signals scaled down in step 104b are passed to the next transmitter stages for adaptation and transmission.

Finally, in step 107 the corresponding base band module which has extra physical channel signals for transmission e.g. HSDPA channels, schedules said extra traffic in the corresponding carrier according to the transmission power margin available or power overload information received in step 105.

The process for transmission power control described above comprising steps 100 to 107 is repeated at periodic intervals of time, typically of 2 ms or 10ms, as long as said transmission power control according to the invention is required (activated).

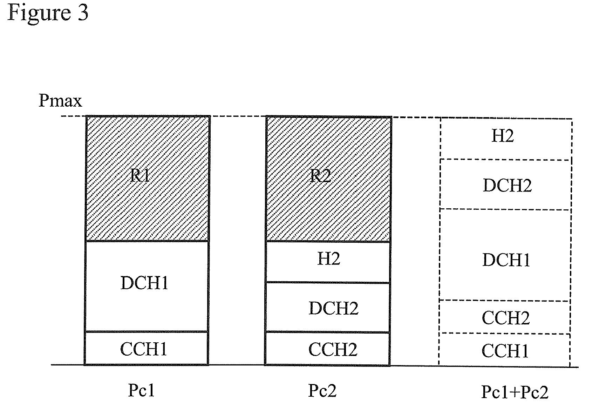

Figure 3 shows an example of a conventional static transmission power allocation chart for a first carrier Pc1 and a second carrier Pc2. The transmission power allocation for the first carrier Pc1 comprises a fixed transmission power amount allocated for common channel communication CCH1, a fixed transmission power amount allocated for dedicated channel communication DCH 1 and a fixed transmission power amount reserved for no use R1. The transmission power allocation for the second carrier Pc2 comprises a fixed transmission power amount allocated for common channel communication CCH2, a fixed transmission power amount allocated for dedicated channel communication DCH2, a fixed transmission power amount allocated for HSDPA channel communication H2, and a fixed transmission power amount reserved for no use R2. Also shown in the figure, the sum of the transmission power allocated to said first and second carrier Pc1 +Pc2 and the maximum transmission power value Pmax of the transmitter.

It has to be noted that said static transmission power "allocated" is fixed and does not change during the communication. Some fixed amount of transmission power is allocated for dedicated channel communication DCH1, DCH2 in the first and second carrier independent if this amount is actually "used" for communication or not or even if more power is needed for such kind of communication e.g. in case radio cell traffic load is high. On the other hand, traffic load on dedicated channels DCH2 for the second carrier is reduced due to the fact that some transmission power is allocated for HSDPA channel communication H2 also in the second carrier.

Since such an allocation is predefined and fixed, each carrier can only use 50% of the maximum transmission power available in order to avoid overload of the transmitter power amplifier. Some amount of transmission power is reserved R1, R2 for the first and the second carrier which cannot be used for communication.

It is clear then that a transmission power allocation of the kind shown in Figure 3 does not use transmission power resources optimally according to the traffic load situation of the radio cell. On the other hand since some transmission power is allocated to HSDPA channels, the communication for dedicated channels in the second carrier DCH2 is degraded and limited.

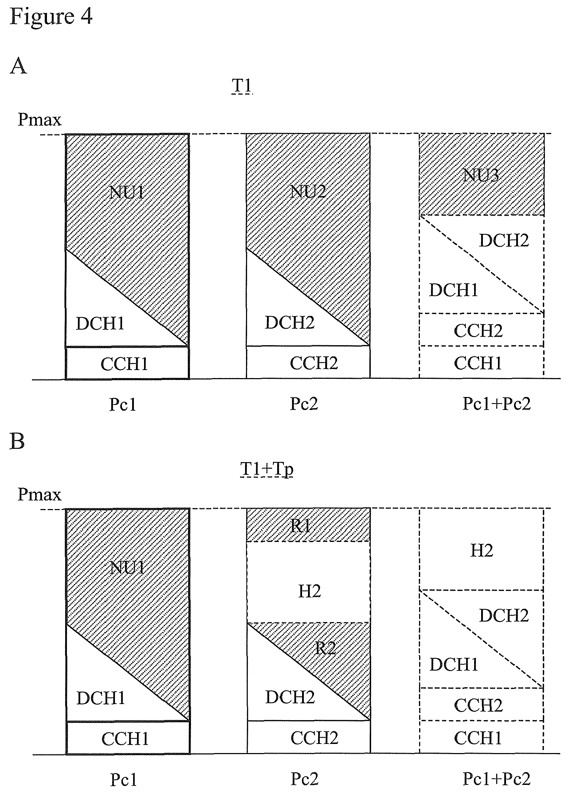

Figures 4 A, B show an example of transmission power usage of a first carrier Pc1 and a second carrier Pc2, according to the invention, at two different time points T1 and T1 +Tp. Figure 4A shows the state of the transmission power usage of the first and second carrier at a certain time point T1 and Figure 4B shows the state of the transmission power usage of the first and second carrier, according to the invention, after a transmission power control process interval T1 +Tp .

The transmission power usage for the first carrier Pc1 in Figures 4 A,B comprise a fixed transmission power amount allocated for common channel communication CCH1, a variable transmission power amount used for dedicated channel communication DCH1, and a variable transmission power amount not being used NU1. The transmission power usage for the second carrier Pc2 in Figure 4A comprises a fixed transmission power amount allocated for common channel communication CCH2, a variable transmission power amount used for dedicated channel communication DCH2, and a variable transmission power amount not being used NU2. The transmission power usage for the second carrier Pc2 in Figure 4B comprises a fixed transmission power amount allocated for common channel communication CCH2, a variable transmission power amount used for dedicated channel communication DCH2, a variable transmission power amount used for HSDPA channel communication H2, and a variable reserved transmission power amount R1 and R2 which is not used at that point of time in the second carrier.

Figures 4 A,B also show the sum of the transmission power usage of the first and the second carrier Pc1 +Pc2 at two successive time points T1 and T1 +Tp according to the invention and a maximum transmission power value Pmax available in the transmitter.

It has to be noted that the only fixed transmission power values of the example of figure 4 are the ones allocated for common channel communication CCH1, CCH2 in the first and the second carrier. The rest of the transmission power values DCH1, DCH2, NU1, NU2, NU3, R1, R2, H2 can dynamically change at any point of time, more specifically at any processing period Tp, 2 to 10 ms, of the method for transmission power control described in figures 1 and 2.

In a preferred embodiment of the invention, priority is given to communication with common and dedicated channels CCH1,CCH2, DCH1 and DCH2, so that they can use up to the maximum of the transmission power available Pmax as needed according to the radio cell traffic load situation, and in case they do not use said maximum transmission power, the remaining transmission power margin can be used for HSDPA channel communication H2 in any of the carriers. In the example of Figure 4 we assume that HSDPA service is introduced in the second carrier so that when some transmission power is available which is not used by the common and dedicated channels of the first and second carriers it will be used for HSDPA channel communication in the second carrier. The advantage of this approach according to the invention is that HSDPA traffic can be introduced in a cell without degrading or limiting actual common and dedicated channel communication resource usage.

Figure 4A shows the actual transmission power usage of a first carrier Pc1 and a second carrier Pc2 according to the invention at a certain point of time T1 in which HSDPA traffic has not been introduced yet. A certain fixed amount of transmission power has been allocated to the common channels CCH1, CCH2 and the dedicated channels DCH1, DCH2 use transmission power resources as needed according to the radio cell traffic load situation. Some carrier transmission power is not being used NU1, NU2 at time point T1, so that the signal power of the sum of the two carriers Pc1 +Pc2, which is the power to be transmitted, is lower than a threshold, which in this case is set to the maximum available transmission power. According to the condition of step 102 of Figure 2, the condition is not met and the system then follows with steps 104 and 105 of Figure 2 by calculating a margin of transmission power available for each of the carriers and sending it to the corresponding base band modules in charge of transmitting the physical channels signals., e.g. in the case of Figure 4 the amount NU3, e.g. in dB, is transmitted to the base band module in charge of HSDPA traffic scheduling for the second carrier. In another case in which HSDPA traffic contributes to the first and the second carrier then an amount NU3/2 could be for example sent to the corresponding base band modules in charge of HSDPA traffic scheduling for the first and the second carrier.

Figure 4B shows the actual transmission power usage of the first and second carrier according to the invention at the next time interval T1 +Tp. According to the invention, in step in step 107 of Figure 2 the corresponding base band module in charge of HSDPA traffic scheduling for the second carrier uses the signaled remaining margin amount of transmission power NU3 not used by the common and dedicated channels of the first and second carrier for HSDPA channel transmission H2.

It is clear from Figures 4 A,B that the remaining amount of transmission power not used by the common and dedicated channels NU3 is the amount used for HSDPA transmission H2 in the second carrier and that the referred reserved amount of transmission power regions R1, R2 of the second carrier correspond to the transmission power already used by the common and dedicated channels CCH1, DCH of the first carrier.

As shown by the sum of the transmission power usage of the first and the second carrier Pc1 +Pc2 in figure 4B, the maximum available transmission power is optimally used without degrading common and dedicated channel traffic CCH1, CCH2, DCH1, DCH2. On the other hand HSDPA traffic H2 dynamically adapts to the available remaining transmission power.

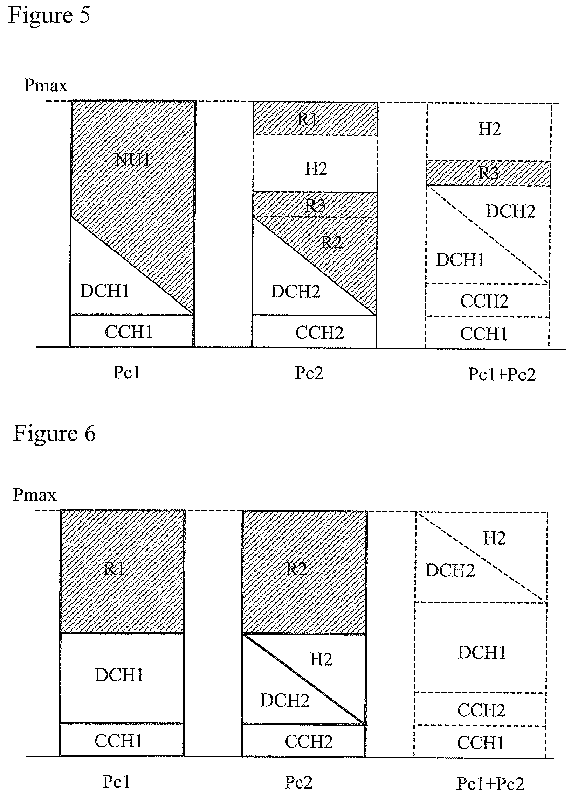

Figure 5 shows a second example of a dynamic transmission power control according to the invention. The example of Figure 5 is the same as the shown in Figure 4 but for the fact that optionally, not the completely remaining amount of transmission power e.g. NU3 in figure 4A is sent to the corresponding HSDPA base band board, but an amount less than that so that the HSDPA traffic H2 never uses all the power not used by the common and dedicated channels CCH1, CCH2, DCH1, DCH2. In Figure 5 it is seen that an extra certain amount of transmission power is reserved R3 which is not used for HSDPA channel communication H2. Alternatively it is also possible that the complete remaining amount of transmission power e.g. NU3 in figure 4A is sent to the corresponding HSDPA base band module but the HSDPA scheduler of such module uses only an amount less than the communicated by the power control unit PCU of Figure 1.

Figure 6 shows a third example of a dynamic transmission power control according to the invention. This example covers scenarios in which dynamic adaptation of HSDPA traffic is done only for one carrier or scenarios in which the transmitter transmits only one carrier (single-carrier communication). In the example of the figure the transmission power control method according to the invention is applied only to control de power used in the second carrier Pc2. The transmission power allocation for the first carrier Pc1 is fixed for the transmission of common and dedicated channels CCH1 and DCH1 and with a maximum allowed transmission power value set to 50% of the maximum transmission power available for the transmitter Pmax. The transmission power allocation for the second carrier Pc2 is fixed for the transmission of common channels CCH2 and variable for dedicated channels DCH2. HSDPA traffic for the second carrier uses the remaining transmission power not used by the dedicated channels DCH2 up to a maximum allowed power value set to 50% of the maximum transmission power available for the transmitter Pmax.

The transmitter power control method explained in Figure 2 applies here only for one carrier, so that in step 101 the digital power of only one carrier is calculated and the power threshold value PT in step 102 is set to 50% of the maximum transmission power available for the transmitter Pmax.

For the sake of generalization, although the invention has been described for a single- or multicarrier radio communication system, the principles of the invention apply also to other data communication systems which allow dynamic usage of a total transmission power available between the carriers and the physical channels within the carriers.

It is also understood that the invention may not be only used for the introduction of HSDPA service in a radio communication system which already provides legacy common and dedicated channel communication, but can be also applied for the introduction of other downlink transmission technologies which use the remaining transmission power available in the transmitter without degrading and limiting said legacy common and dedicated traffic.

## Claims

1. Method for transmission power control in a single- or multi-carrier communications system, each carrier comprising a plurality of communication physical channels, and in which a maximum transmission power budget is distributed between the physical channels within one carrier and/or between carriers, the method comprising:
- adding the digital physical channel signals belonging to each carrier (step 100),
- calculating the power of each digital carrier signal (Sc1 to Sc4) and adding the power of all carriers (step 101),
- comparing a resulting transmission power value (PC) to a certain threshold value (PT) (step 102),
- if the transmission power value (PC) is lower than the threshold value (PT), calculating a margin of transmission power available (NU3) for each of the carriers (step 104),
- sending said transmission power margin to at least one base band module (BB1 to BBn) in charge of transmitting physical channel signals for said carriers,
- said at least one base band module (BB1 to BBn) using said transmission power margin (NU3) for transmitting extra physical channels (H2) in said carriers.

2. The method for transmission power control of claim 1 **characterized in that** if the calculated transmission power value (PC) is greater than the threshold value (PT) (step 102),
- calculating a transmission power overload margin (step 103),
- scaling down linearly each of the digital carrier signals by a certain factor (step 104b),
- sending said transmission power overload margin to at least one base band module (BB1 to BBn) in charge of transmitting physical channel signals for said carriers,
- said at least one base band module (BB1 to BBn) using said power overload margin for reducing physical channels (H2) transmitted in said carriers.

3. The method for transmission power control of claims 1 or 2 **characterized by** reducing or increasing the amount of HSDPA physical channels (H2) according to information received (Ps) about current transmission power resources.

4. The method for transmission power control of claims 3 **characterized by** giving priority to transmission power usage for common channel and dedicated channel communication (CCH1, CCH2, DCH1, DCH2).

5. Transmitter power control system for a single-carrier or multi-carrier communication system comprising means for
- adding the digital physical channel signals belonging to each carrier,
- calculating the power of each digital carrier signal (Sc1 to Sc4) and adding the power of all carriers,
- comparing a resulting transmission power value (PC) to a certain threshold value (PT),
- if the transmission power value (PC) is lower than the threshold value (PT), calculating a margin of transmission power available (NU3) for each of the carriers,
- sending said transmission power margin to at least one base band module (BB1 to BBn) in charge of transmitting physical channel signals for said carriers.

6. The transmitter power control system of claim 5 further comprising means so that if the calculated transmission power value (PC) is greater than the threshold value (PT),
- calculating a transmission power overload margin,
- scaling down linearly each of the digital carrier signals by a certain factor,
- sending said transmission power overload margin to at least one base band module (BB1 to BBn) in charge of transmitting physical channel signals for said carriers.

7. Base station comprising a transmitter power control system according to claim 5.
